# DEMANDE DE BREVET EUROPEEN

(11) **EP 2 133 241 A1**
(43) Date de publication de la demande: **16.12.2009**
(21) Numéro de dépôt: 09162233.2
(22) Date de dépôt: 09.06.2009
(51) Int. Cl.: B60R 11/06

(54) **Dispositif de sécurité pour la protection des occupants d'un véhicule automobile**

(30) Priorité: 12.06.2008 FR 0853899
(71) Demandeur: ADM Concept, 78280 Guyancourt (FR)
(72) Inventeur: Mocquard, Dominique M., 75014, Paris (FR)
(74) Mandataire: Delprat, Olivier

(57) **Abrégé**

Ce dispositif de sécurité, pour la protection des occupants d'un véhicule automobile contre au moins un produit nomade susceptible de former un projectile en cas de choc, comprend un élément déployable (11,13,21,24,25) sous l'action d'un déclencheur pour empêcher ledit produit nomade d'être projeté dans l'habitacle.

## Description

La présente invention concerne la protection des occupants d'un véhicule automobile, et se rapporte plus particulièrement à un dispositif de sécurité permettant de protéger les occupants d'un véhicule contre des équipements ou dispositifs qui sont susceptibles de constituer des projectiles en cas de choc.

Les véhicules automobiles, et en particulier les planches de bord, sont souvent dotés d'équipements intégrés en première monte.

Tel est par exemple le cas de systèmes de positionnement global (GPS).

Il existe par ailleurs des solutions permettant de rapporter de tels équipements lorsque le véhicule en est à l'origine dépourvu, ou de monter des équipements complémentaires.

C'est ainsi que la société demanderesse a développé un support qui est destiné à être intégré à une planche de bord d'un véhicule automobile pour recevoir des appareils électroniques nomades, afin de disposer des fonctionnalités liées à l'utilisation de l'appareil lorsqu'il utilise son véhicule, tout en conservant le caractère nomade de l'appareil.

On pourra à cet égard, se référer à la demande de brevet français publiée sous le n° FR 2 909 215.

Il existe donc une tendance selon laquelle des produits nomades viennent se monter sur la planche de bord d'un véhicule automobile, par exemple à l'aide de supports appropriés intégrés à la planche de bord.

Toutefois, lorsqu'ils sont positionnés et maintenus sur leur socle, ils sont susceptibles d'être éjectés en cas de choc.

Ces produits rapportés sont alors susceptibles de poser des problèmes de sécurité.

En effet, malgré la présence de nombreux dispositifs de sécurité, tels que des coussins gonflables de sécurité ou airbags^{®}, ces produits sont susceptibles de constituer des projectiles en cas de choc violent, et venir ainsi blesser les occupants.

Il existe donc un besoin pour un dispositif capable d'améliorer la sécurité des véhicules dotés de dispositifs destinés à recevoir, de manière amovible, des produits nomades.

L'invention a donc pour objet un dispositif de sécurité pour la protection des occupants d'un véhicule automobile contre au moins un produit nomade susceptible de former un projectile en cas de choc.

Selon une caractéristique générale de ce dispositif, celui-ci comprend un élément déployable sous l'action d'un déclencheur pour empêcher ledit produit nomade d'être projeté dans l'habitacle du véhicule.

Ce dispositif de sécurité peut ainsi venir se monter à proximité immédiate du produit nomade pour, en cas de choc, se déployer et former un écran qui vient s'intercaler entre le produit nomade et les occupants en évitant, de la sorte, tout risque de blessure.

Dans un mode de réalisation, l'élément déployable comprend un fourreau déployable pour venir entourer ledit produit nomade.

Ce fourreau peut par exemple comprendre des moyens pour refermer le fourreau autour dudit produit lors du déploiement.

Dans un autre mode de réalisation, l'élément déployable comprend un actionneur venant activer un organe de verrouillage d'un socle pour ledit produit nomade.

Ce mode de réalisation est particulièrement avantageux lorsque le produit nomade est monté sur un socle, lequel est monté de manière amovible sur une embase de support. On évite de la sorte toute désolidarisation du socle et de l'embase en cas de choc.

Selon encore un autre mode de réalisation, l'élément déployable comprend deux montants déployables de part et d'autre dudit produit nomade dans une zone de l'habitacle située entre le produit et les places des passagers, lesdits montants supportant un écran de protection.

Par exemple, l'écran de protection peut comprendre par un filet.

Selon encore un autre mode de réalisation, l'élément déployable peut comprendre un arceau de sécurité prévu dans une zone de l'habitacle située entre le produit et les places des passagers.

Selon un autre mode de réalisation, l'élément déployable comprend un coussin gonflable de sécurité en forme de rideau positionné dans une zone de l'habitacle située entre le produit et les places des passagers.

Par exemple, le coussin a une forme rectiligne.

En variante, il peut présenter une forme globalement concave, à concavité tournée vers ledit produit.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue avec arraché partiel d'une portion de planche de bord dotée d'un dispositif de support pour produit nomade;
- la figure 2 illustre le principe de montage d'un dispositif de sécurité conforme à l'invention;
- la figure 3 illustre le fonctionnement du dispositif de la figure 2 ;
- la figure 4 illustre un deuxième mode de réalisation d'un dispositif conforme à l'invention ;
- la figure 5 illustre un troisième mode de réalisation d'un dispositif de sécurité conforme à l'invention;
- les figures 6 et 7 illustrent un quatrième mode de réalisation d'un dispositif de sécurité conforme à l'invention en position de repos et en position active, respectivement; et
- la figure 8 illustre un cinquième mode de réalisation d'un dispositif de sécurité conforme à l'invention.

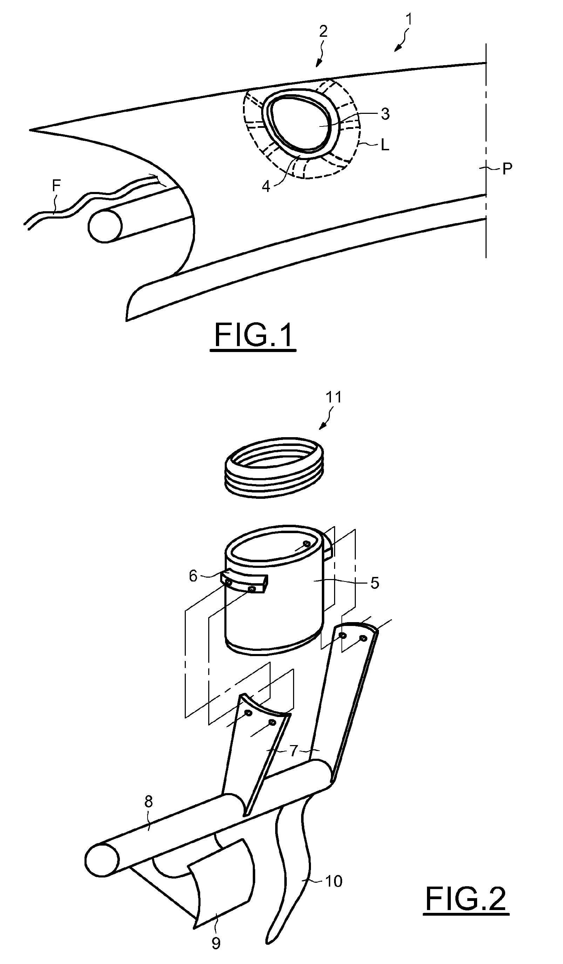

Sur la figure 1, on a représenté une vue générale d'une portion de planche de bord d'un véhicule automobile, désignée par la référence générale 1.

L'invention ne concernant que la protection des occupants du véhicule en présence de produits nomades rapportés sur la planche de bord et qui sont susceptibles de former des projectiles en cas de choc, seule la portion de la planche de bord sur laquelle vient se monter le produit nomade a été représentée sur cette figure 1.

Mais on notera que l'on ne sort pas du cadre de l'invention lorsque le produit nomade vient se monter sur toute autre partie de l'habitacle du véhicule.

Ainsi, le dispositif de sécurité selon l'invention peut avantageusement être utilisé pour assurer une protection d'un produit nomade monté par exemple sur la console centrale, sur un appui-tête, sur un accoudoir avant ou arrière, ...

On notera également que, par « produit nomade » on entend, dans le cadre de la description, tous types d'équipements portatifs, grand public, autonome et destiné à exécuter une ou plusieurs fonctions élémentaires, tel qu'un navigateur GPS, un lecteur numérique portatif de musique, de type lecteur MP3, un assistant personnel, un poste téléphonique mobile, un lecteur de disque DVD, un support de stockage de données tel qu'une clé USB, une carte SIM, une carte mémoire, ...

Par « produit nomade », on entend également, de manière générale, tout autre type d'élément rapporté ou fixé sur la planche de bord, notamment par encliquetage, susceptible d'être éjecté en cas de choc.

On notera également que, dans le cadre de l'invention, on entend par « véhicule automobile », tous types de véhicules, tel qu'un véhicule automobile, un aéronef, une machine agricole, ...

Ainsi, de manière générale, l'invention concerne une protection contre tous types d'objets susceptibles de se détacher pour constituer un projectile en cas de choc.

Comme on le voit sur la figure 1, dans l'exemple illustré, le produit nomade vient se monter sur une platine 2, ici schématiquement représentée, qui comporte, par exemple, un socle 3 et une embase 4.

Par exemple, le socle 3 comporte une première face globalement plane ou légèrement convexe, à convexité correspondant à celle de la peau P de la planche de bord, et une face opposée qui délimite un logement de réception du produit nomade.

Il peut être monté à rotation par rapport à l'embase 4 entre une position de repos, visible sur la figure 1, et une position active, dans laquelle le logement est accessible pour recevoir et maintenir le produit nomade.

Le logement comporte à cet égard des moyens de fixation mécaniques, notamment par encliquetage ou par simple complémentarité de forme, pour le maintien du produit nomade. Il peut encore comporter des moyens de raccordement électriques, éventuellement confondus avec les moyens de fixation mécanique, pour le raccordement du produit nomade à un faisceau électrique F du véhicule, notamment en vue de son alimentation.

En se référant maintenant à la figure 2, dans un mode de réalisation, l'embase 4 est montée sur un pot 5, lequel comporte deux oreilles latérales, telles que 6, pour la solidarisation du pot sur deux bras 7 prévus sur une traverse 8 de la planche de bord, laquelle est, de manière connue en soi, montée sur un support 9 de colonne de direction et sur une paire de pieds d'extrémité 10.

Dans l'exemple de réalisation représenté sur les figures 1 à 3, dans le but de protéger les occupants en présence d'un produit monté sur le socle 2, l'ensemble est complété par un dispositif de sécurité comportant un élément déployable désigné par la référence numérique générale 11.

Cet élément 11 est ici constitué par un fourreau qui vient se fixer sur le pot 5 ou sur les bras 7.

Le fourreau 11 est réalisé sous la forme d'un sac gonflable. Il comporte en d'autres termes une double paroi et est susceptible d'être gonflé sous l'action de moyens de gonflage associés à des moyens de déclenchement sous forme de moyens de mise à feu (non représentés) capables de se déclencher sous l'action d'un choc.

Ainsi, en l'absence de choc, le fourreau 11 est à l'état replié (figure 2).

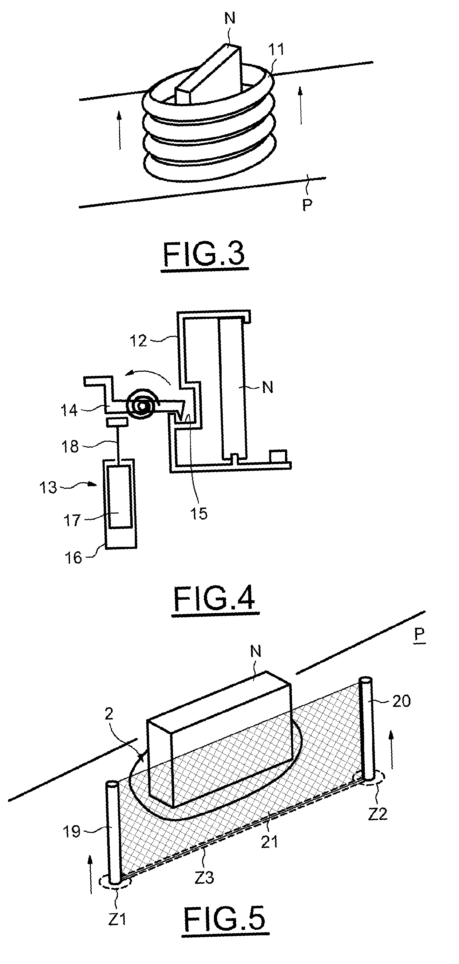

Au contraire, lorsqu'un choc se produit, les moyens de mise à feu déclenchent les moyens de gonflage de manière à provoquer une arrivée brusque d'air dans le sac 11 et provoquer ainsi son déploiement (figure 3).

Comme on le voit, le fourreau 11 a une forme globalement cylindrique, par exemple à base ronde ou ovale. Ainsi, à l'état déployé, il vient entourer le produit nomade N et l'empêche ainsi d'être projeté en direction des occupants du véhicule.

Bien entendu, comme illustré sur la figure 1, on prévoira dans la peau P de la planche de bord, de préférence dans sa face non visible, une ou des lignes de moindre résistance mécanique L de forme complémentaire de celle du fourreau 11 de sorte que, lors du déclenchement, le gonflage du fourreau provoque une rupture de cette ligne, permettant ainsi un déploiement complet du fourreau.

Afin d'améliorer la sécurité, on pourra prévoir, dans le fourreau, des moyens de fermeture, par exemple sous la forme d'un fil torsadé en spires, de manière à venir fermer l'extrémité libre du fourreau et former de la sorte une cloche enfermant entièrement le produit nomade en cas de choc.

Dans un autre mode de réalisation, visible sur la figure 4, le produit nomade N vient se fixer de manière serrée sur une platine 12, laquelle est montée de manière amovible par rapport à la planche de bord.

Dans le but d'éviter tour éjection de la platine, dans ce cas, l'élément déployable comprend alors un actionneur sous la forme d'un mécanisme à piston 13 qui vient actionner un pêne 14 pour venir en prise avec un logement formant gâche, référencé 15, prévu dans la platine et solidariser ainsi la platine et la planche de bord.

Par exemple, le mécanisme à piston peut comporter un cylindre 16 doté de moyens de mise à feu 17 actionnant une tige de piston 18 pour venir basculer le pêne 14 en position de blocage de la platine 15.

Selon encore un autre mode de réalisation, visible sur la figure 5, l'élément déployable comporte ici deux montants 19 et 20 associés chacun à un même mécanisme de déploiement, par exemple similaire au mécanisme à piston 13 de la figure 4.

Comme on le voit sur la figure 5, ces montants 19 et 20 sont disposés de part et d'autre du produit nomade N, à proximité immédiate de celui-ci.

Comme on le voit, un écran 21 s'étend entre les deux montants 19 et 20.

Par exemple, cet écran 21 est constitué par un filet repliable. Mais on pourrait bien entendu, en variante, utiliser tout autre matériau tissé ou non tissé et suffisamment solide pour arrêter le produit nomade N en cas de choc.

Selon l'exemple de réalisation ici représenté, les montants 19 et 20, ainsi que l'écran 21 sont positionnés sous la planche de bord. Ils se déploient, lors du choc, de manière à constituer un écran s'interposant entre le produit nomade N et les occupants.

Dans ce cas, on pourrait prévoir, dans la peau P de la planche de bord, une zone de moindre résistance mécanique comportant par exemple deux zones Z1 et Z2 annulaires, à l'endroit des deux montants 19 et 20, et une zone rectiligne Z3 s'étendant à l'endroit de l'écran 24.

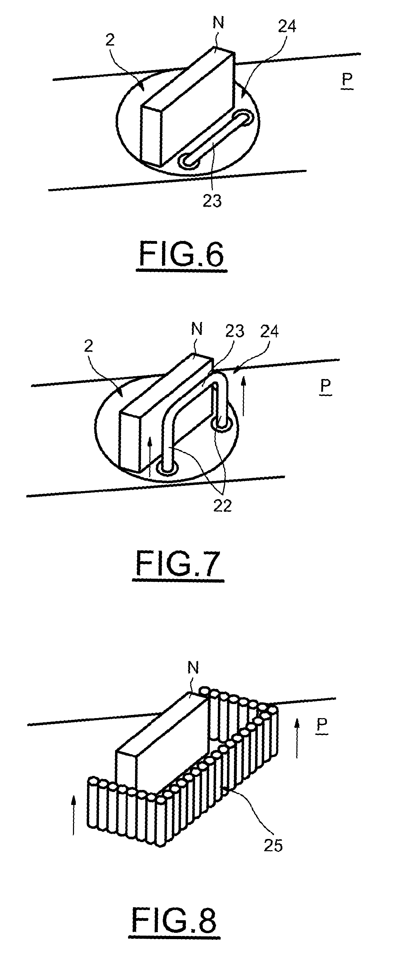

Selon encore un autre mode de réalisation, visible sur les figures 6 et 7, l'élément déployable est ici constitué par un arceau de sécurité 24 qui comporte deux tiges telles que 22 ainsi qu'une barre transversale 23 reliant deux extrémités supérieures des tiges.

Les extrémités libres des deux tiges sont, quant à elles, associées à un mécanisme de déploiement, de préférence commun, similaire au mécanisme à piston illustré en référence à la figure 4.

Aussi, selon cet agencement, en cas de choc, l'arceau 24 vient se déployer pour venir se positionner entre le produit nomade N et les occupants, de manière à constituer un obstacle empêchant la projection du produit nomade.

Enfin, selon un autre mode de réalisation, visible sur la figure 8, l'élément déployable comporte un coussin gonflable de sécurité 25 associé à des moyens de gonflage et à des moyens de mise à feu (non représentés) destinés à déclencher les moyens de gonflage pour, en cas de choc, provoquer un gonflage du coussin pour arrêter le projectile.

Par exemple, le coussin gonflable 25 peut être un coussin de type rideau, qui se déploie de bas en haut en cas de choc. Il peut ainsi adopter une forme rectiligne ou une forme concave, par exemple arrondie ou en U, pour venir entourer le projectile.

Dans ce mode de réalisation, le coussin gonflable peut se présenter sous la forme d'une cassette intégrée à la planche de bord ou montée sur la platine 2.

De même, dans les exemples de réalisation illustrés aux figures 4 à 7, les mécanismes de déploiement à piston sont avantageusement fixés sur les bras 7 solidaires de la traverse 6.

On notera enfin que l'invention n'est pas limitée aux modes de réalisation décrits. Il est en effet possible, en variante, de prévoir que l'élément déployable assure le blocage simultané de plusieurs produits en formant un écran ou, de manière générale, un moyen de retenue commun pour plusieurs produits.

## Revendications

1. Dispositif de sécurité pour la protection des occupants d'un véhicule automobile contre au moins un produit nomade (N) susceptible de former un projectile en cas de choc, **caractérisé en ce qu'**il comprend un élément déployable (11, 13, 21, 24, 25) sous l'action d'un déclencheur pour empêcher ledit produit nomade d'être projeté dans l'habitacle du véhicule.

2. Dispositif selon la revendication 1, **caractérisé en ce que** l'élément déployable comprend un fourreau (11) déployable pour venir entourer ledit produit nomade.

3. Dispositif selon la revendication 2, **caractérisé en ce que** le fourreau (11) comprend des moyens pour refermer le fourreau autour dudit produit lors du déploiement.

4. Dispositif selon la revendication 1, **caractérisé en ce que** l'élément déployable comprend un actionneur (13) venant activer un organe de verrouillage (14) d'un socle (12) pour ledit produit nomade.

5. Dispositif selon la revendication 1, **caractérisé en ce que** l'élément déployable comprend au moins deux montants (19, 20) déployables de part et d'autre dudit produit nomade dans une zone de l'habitacle située entre le produit et les places des passagers, lesdits montants supportant un écran de protection (21).

6. Dispositif selon la revendication 5, **caractérisé en ce que** l'écran de protection (21) comprend un filet.

7. Dispositif selon la revendication 1, **caractérisé en ce que** l'élément déployable comprend un arceau de sécurité (24) prévu dans une zone de l'habitacle située entre le produit et les places des passagers.

8. Dispositif selon la revendication 1, **caractérisé en ce que** l'élément déployable comprend un coussin gonflable de sécurité (25) en forme de rideau, prévu dans une zone de l'habitacle située entre le produit et les places des passagers.

9. Dispositif selon la revendication 8, **caractérisé en ce que** le coussin (25) a une forme rectiligne.

10. Dispositif selon la revendication 8, **caractérisé en ce que** le coussin (25) a une forme globalement concave, à concavité tournée vers ledit produit.
